# EUROPEAN PATENT APPLICATION

(11) **EP 2 186 406 A2**
(43) Date of publication of application: **19.05.2010**
(21) Application number: 09014167.2
(22) Date of filing: 12.11.2009
(51) Int. Cl.: A01M 23/08

(54) **Device for baiting snails**

(30) Priority: 17.11.2008 IT BO20080695
(71) Applicant: Conti, Giuseppe, 50023 Impruneta (FI) (IT)
(72) Inventor: Conti, Giuseppe, 50023 Impruneta (FI) (IT)
(74) Representative: Barberi, Vittorio

(57) **Abstract**

The invention relates to a device for combating snails that comprises:
- a hollow body (2), provided with one or more openings or windows (3) sized to allow the inward passage of slugs;
- a seat or positioning zone (4), internal to said body (2), for accommodating a substance to attract the slugs;
- a one-way barrier (5), provided at each of these windows (3), and apt to permit the passage of the snails into the inside of the container (2), preventing the passage in the opposite direction, toward the outside (FIG.1)

## Description

The present invention relates to a device and a system for combating slugs and other pests.

In the common agricultural practice, one of the main problems for growers is represented by insects and other pests that often cause serious damage to crops.

An example is the slugs that may be able, if not prevented, to destroy completely vegetable crops.

Currently, the system most commonly used to combat the slugs, especially in the gardens, is to spread the field with chemicals or "poisons", depending on the type of animal to be eliminated.

The aforementioned method has some drawbacks, in particular for the environment and the human health.

A first drawback relates to the waste of the chemical used, which often is scattered on the ground in quantities well above the necessary.

A second drawback, which results from the uncontrolled scatter of these products, relates to serious and permanent damage that can lead to ground water. In fact, the chemicals spread on the ground, slowly but surely, percolate through the same terrain, reaching the groundwater.

A third drawback of this technique for the distribution of poison regards the health of consumers, as the excess of chemicals spread on the soil ends up on vegetables and fruits that are then collected and consumed, with the consequent possibility of presence also relevant of residues of these substances in food, with clear damage to health.

A fourth drawback is related to the uncontrolled repetition of treatments against insects and other pests. In fact, during the rains, for the passing of the water on the soil, chemicals that are distributed on the ground are lost and for that reason, farmers repeat the treatment, thus multiplying the amount of such substances supplied to the soil and, consequently, the underlying groundwater. In other words, the quantity of chemicals used is introduced into the food chain, both through the recruitment of vegetables that have come in direct contact or through the groundwater, resulting in pollution of drinking water and / or water used for irrigation of crops.

The purpose of this invention is to provide a device and a system used in the fight against snails and other pests without the use of poison.

This result was reached in accordance with the invention by adopting the idea of making a device and a system having the features described in independent claims. Other features are described in the dependent claims. Among the advantages of the present invention are the following:
- it is possible to fight effectively the slugs without resorting to poison, eliminating all chance of contact with the poison from children, pets, birds, etc...;
- the device is shaped so as to prevent the escape of the slugs as they enter the same device;
- the device can be equipped with accessory parts that effectively prevent the escape of the snails as they enter the same device;
- it is possible to eliminate the slugs using the device in combination with the poison, preventing the same slugs to go outside of the device, eliminating any significant degree the risk of pollution and / or intoxication;
- in case of equipment with poison, also, the quantity of product to be used can be measured with precision, because the product is not lost on the ground, but made available in accordance with the correct strategies to combat pests, without the wastage of the technique known that, in contrast, have a bad impact in terms of environmental and economic parameters;
- the device is extremely effective because it can be placed on the ground in the most appropriate zones, making available to animals to be fought the substances contained therein;
- the contents of the device is effectively protected from rain and irrigation water, without danger of leakage into the environment;
- the waste resulting from the action of rain are eliminated since the device protects the substances contained therein;
- the device is easy to fill and be placed on the ground;
- the presence of a barrier shaped as a cylindrical surface was extremely effective to capture snails;
- the device keeps its characteristics unchanged after a long period and therefore the relatively low cost to buy it can be conveniently amortized. These and other advantages and features of the present invention will be more and better understood by every technical of the branch by means of the following description and with the help of the annexed drawings, given as practical examples of the invention, but not to be considered in a restrictive meaning, in which:

- Fig.1 is a schematic sectional view along a vertical axis of a possible embodiment of a device made in accordance with the invention, represented with the device exploded, broken into two parts;
- Figs. 2A, 2B show the details of possible alternative conformations of an inner edge which defines a barrier;
- Fig.3 is a schematic sectional view of another embodiment of the invention, represented only as regards the base;
- Fig.4 relates to a particular surface that shows the shape of a portion of the device;
- Figs.5 and 6 show, respectively, in a sectional view and in a plan view, details of possible conformations of a ring fit on an inner edge which defines a barrier;
- Fig.7 shows the sectional view of a detail on a seat for a substance that attracts the snails.

Referring to the drawings, a device (1) made according to the invention can be used to fight slugs and other pests.

The device (1) comprises:
- a hollow containment body (2), provided with one or more openings or windows (3) sized to allow the inward passage of slugs;
- a seat or positioning zone (4), internal to said body (2), for accommodating a substance to attract the snails (that substance, as will be described below, can simply be attractive or even poisonous);
- a one-way barrier (5), provided at each of these windows (3), and apt to permit the passage of the snails into the interior of the container (2), preventing the passage in the opposite direction, toward the outside.

In the not limiting shown example, the body of the device comprises three parts that can be formed in plastic, by molding, and assembled in a manner known, for example, through joint, screw, graft, gluing, etc... Obviously, the practical realization of the body (2) may be different, thus remaining within the present invention, also using other materials.

In particular, the body (2) presents a circular shape in plan and comprises a cover (2a), an intermediate body (2b), which defines the volume of the body (2), and a base (2c) terminating inferiorly the body (2).

The cover (2a) has an edge (22), projecting outwards, which protect from water or rain water the other part of the device; in particular, the projecting edge (22) prevents the entry of water through the windows (3).

In the example, the windows (3) are four and have a substantially rectangular shape being separated by septa (23).

In the example, the windows are open at bottom and are defined by the upper portion of the intermediate body (2b) when the body (2) is assembled in configuration of use.

The barrier (5) is formed by a cylindrical surface, with an edge substantially shaped with "L" section, defining a sort of crown cone inferiorly open. In practice, the slugs, entering the container (2) through openings (3), are capable of moving along the horizontal portion (50) of the barrier (5). The same slugs can then descend along the vertical wall (51), particularly sliding along the face (51a) facing the inside of the container, to fall to the bottom (20) of the same container (2). Once the snails are on the bottom (20), they can not reach the openings (3) because they cannot overcome the lower end (51b) of the vertical wall (51) of the edge (5), which is distanced from the bottom (20) of container (2). The inability to leave was highlighted in evidence, either by using a substance that attracts the snails, or by using a poison.

The barrier (5) that develops along a cylindrical surface was extremely and surprisingly effective way to trap the snails during the experiments performed.

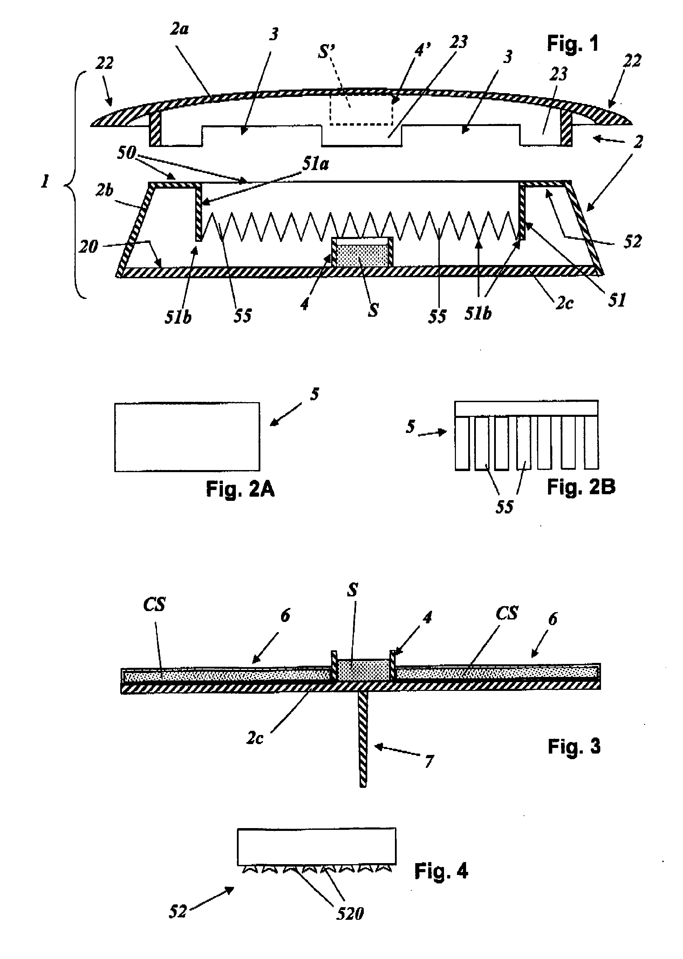

Another obstacle to the passage to the outside of snails is the particular shape of the lower face (52) of the horizontal portion (50). Advantageously, the surface of said portion (52) may be rough, provided with small protrusions (520) that prevent in an even greater extent the passage of snails. In practice, according to the example of Fig.1 and in the detail of Fig.4, the barrier (5) extends according to a cylindrical surface, coaxial to the body (2), to which is united through the horizontal portion (50). Said horizontal portion (50) has a lower face (52), which is inside the open cavity defined by the vertical portion (51) of the barrier (5), and is provided with a plurality of surface irregularities (520) that restrict even more the possibility of movement of snails. Irregularities (520) may be different shaped: for example, may include teeth, grooves, bosses, etc...

In the embodiment shown in the drawings, the angle between the horizontal portion (50) and the vertical portion (51) is a right angle. Other solutions may be envisaged in which this angle is different.

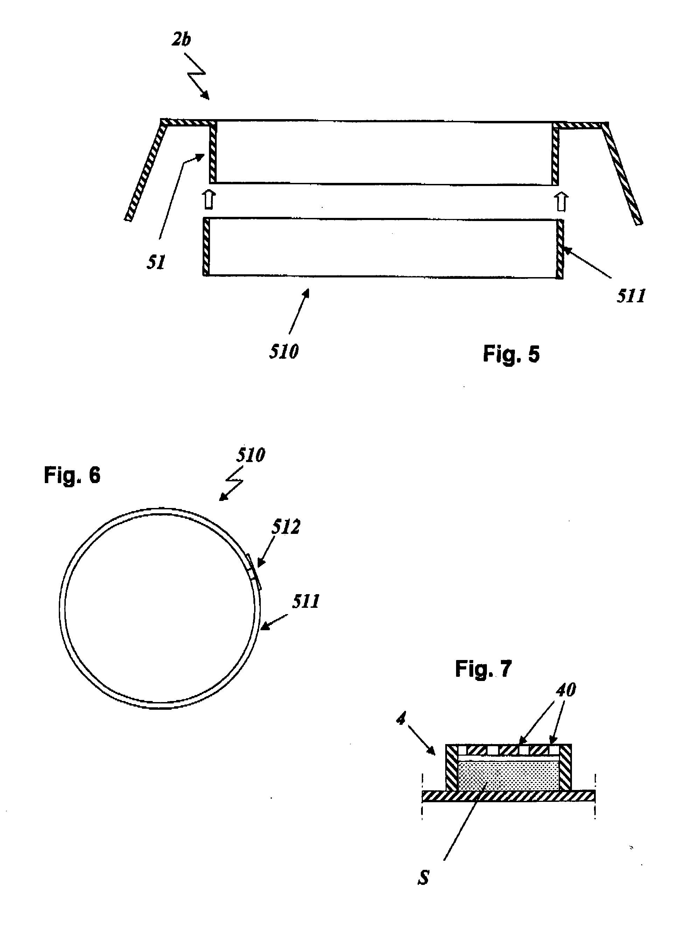

As shown in Figs.5 and 6, the device can also advantageously include a ring (510), worn on the barrier (5), particularly on the vertical portion (51). The ring (510) has an outer surface (511) apt to prevent or at least drastically limit the passage of snails. In practice, the ring (510) can be accomplished in a suitable metal (e.g. copper) or an abrasive material such as, for example, sandpaper. The ring (510) may have a diameter substantially corresponding to the portion (51) to be worn, for allowing a wearing with a slightly forcing on the latter. In the case of an open ring (510), as shown in Fig.6, the two ends of the ring are closed by a connecting element (512), as may be fixed with paper clips or similar means of attachment (not shown) and this solution enables the association of the ring (510) even when it is realized in a non-rigid material such as, for example, sandpaper.

The seat (4), in the examples illustrated, is formed by an box open in the upper, which is provided with openings or small holes (40) through which it can escape the smell of the substances contained in the same seat (4).

In the case of use of the device (1) in combination with a poison, the seat (4) will be opened (inside the container) to allow the contact between the poison and snails.

In practice, the present invention relates to a device for combating slugs and to a system comprising the same device (1) and a substance (S), which may simply attract the snails or even be lethal to them.

This substance (S) can be provided in various forms. For example, can be formed by a slow-release tablet, granules, a gel, a substance in liquid phase, etc... In both cases, is prevented the escaping of the slugs outside of the container (2).

The seat for the substance that attracts the snails may be provided in other locations, e.g. at the cover, as schematically shown in Fig.1, where the seat is marked with the reference (4 ') and the substance with (S'). The number of seats (4) may be different.

The device (1) may also include, as shown in Fig.3, a second seat (6) for the containment of ash, sawdust, or other substance (CS) capable of blocking the sliding of the snails, or at least drastically limit.

Figs.2A and 2B show two alternative embodiments of the barrier (5) shown in Fig.1. In Fig.1 the barrier (5) has a serrated profile (55) defined by a succession of pointed ends. In Fig.2A the edge of the barrier (5) is uniform and straight, while in Fig.2b is defined by small rectangular portions with mainly vertical development.

The device (1) may be sized differently depending on the use, or for more or less snails to capture.

The device may also be provided with means for the positioning on the ground. Such positioning means may comprise, for example, pins capable of being inserted into the ground to support the device, fixing the same to the ground. In Fig.3 is shown a vertical element (7) which can be inserted into the ground to fix the device.

Changes may be made to the form, dimensions, component part locations, and type of materials employed in the embodiment described and illustrated herein without, however, departing from the scope of the present invention.

## Claims

1. Device for combating slugs, **characterized in that** comprises:
- a hollow body (2), provided with one or more openings or windows (3) sized to allow the inward passage of slugs;
- a seat or positioning zone (4), internal to said body (2), for accommodating a substance to attract the slugs;
- a one-way barrier (5), provided at each of these windows (3), and apt to permit the passage of the snails into the inside of the container (2), preventing the passage in the opposite direction, toward the outside.

2. Device according to claim 1, **characterized in that** said barrier (5) is formed by a cylindrical surface arranged vertically.

3. Device according to claim 1, **characterized in that** said barrier (5) is formed by a cylindrical surface provided with a an edge substantially "L-shaped" in section, defining a sort of crown cone open inferiorly.

4. Device according to claim 2 or 3, **characterized in that** said barrier (5) comprises a horizontal portion (50) located downstream of such openings (3) and a vertical wall (51), spaced from the bottom of the container (2) and not surmountable by the slugs.

5. Device according to claim 4, **characterized in that** said vertical wall (51) is developed according a cylindrical surface and that the device (1) includes a ring (510) worn around said wall (51) and having one surface (511) apt to prevent or at least drastically limit the passage of snails.

6. Device according to claim 4, **characterized in that** around this vertical wall (51) is provided a surface (52) rough or provided with small protrusions (520) in order to prevent or at least drastically limit the passage of the snails.

7. Device according to claim 1, **characterized in that** said seat (4) is formed by an open box.

8. Device according to claim 1, **characterized in that** it comprises a second seat (6) for containing ashes, sawdust or similar material (CS).

9. Device according to one of the previous claims **characterized in that** it is provided with one or more elements (7) which can inserted into the ground to fix the device (1).

10. Device according to claim 1, **characterized in that** it comprises an edge (22) outwardly projected, to protect from rain or irrigation and to prevent water from entering through the windows (3).

11. Device according to claim 1, **characterized in that** it comprises at least a box-shaped body (2b, 2c) and a cover (2a), said windows (3) being delimited by the joining of said box-shaped body (2b, 2c) and said cover (2a).

12. System for combating slugs **characterized in that** it comprise a device according one or more of the preceding claims and a substance (S), which attracts slugs and/or which is a poison for the same.

13. System according to claim 12, **characterized in that** the substance (S) is in the form of slow-release tablet.

14. System according to claim 12, **characterized in that** the substance (S) is in the form of gel.
